**Europäisches Patentamt**

**European Patent Office**

**Office européen des brevets**

(19)

(11)  **EP 1 267 276 A1**

(12)  **EUROPEAN PATENT APPLICATION**

(43) Date of publication:
**18.12.2002 Bulletin 2002/51**

(51) Int Cl.$^7$: **G06F 17/30**

(21) Application number: **01113533.2**

(22) Date of filing: **12.06.2001**

| | |
|---|---|
| (84) Designated Contracting States:<br>**AT BE CH CY DE DK ES FI FR GB GR IE IT LI LU**<br>**MC NL PT SE TR**<br>Designated Extension States:<br>**AL LT LV MK RO SI**<br><br>(71) Applicant: **TELEFONAKTIEBOLAGET L M**<br>**ERICSSON**<br>**126 25 Stockholm (SE)**<br><br>(72) Inventors:<br>• **Wiechers, Frank**<br>**48485 Neuenkirchen (DE)** | • **Jodlauk, Gordian**<br>**52146 Wuerselen (DE)**<br>• **Stein, Joern**<br>**52072 Aachen (DE)**<br><br>(74) Representative: **HOFFMANN - EITLE**<br>**Patent- und Rechtsanwälte**<br>**Arabellastrasse 4**<br>**81925 München (DE)** |

(54)  **User selective reload of images**

(57)    To increase flexibility for the display of display pages on a client apparatus, e.g., Web pages, according to the present invention it is proposed to activate a display object (32) for re-display; download display data with respect to the activated display object from a server apparatus (16) through a download request comprising at least an identification of the activated display object; and re-display the activated display object by means of the downloaded display data in the same display page context.

Fig. 5

**EP 1 267 276 A1**

**Description**

FIELD OF INVENTION

The present invention relates to a method of modifying a display page comprising a plurality of display objects arranged in a display page context and a related apparatus.

TECHNICAL BACKGROUND

Nowadays, wireless Internet access and browsing of rich web content using mobile devices becomes more and more predominant. To efficiently use the limited radio resources in available mobile communication networks, e. g., GSM, GPRS, etc. WWW proxy servers can be installed by mobile network operators to reduce the amount of data that is to be transferred via the air interface to mobile terminals of end users for achieving faster download times on wireless links.

One example for a telecommunication environment supporting wireless Internet access is described in c't1999, vol. 8, page 78 and is related to a laptop computer interfaced to a mobile telephone implementing modem functionality to the laptop computer. The described telecommunication system environment consists of two components. A server is operated by the mobile network operator while the client is installed on the laptop computer for surfing in the Internet. The server can filter and compress objects of Internet Web pages while the client submits filter and compression parameters to the server. The server uses the submitted parameters to reduce displayed data as much as possible before forwarding them to the mobile client. E.g., display quality or display format of images is reduced as much as possible before transmission of the related display data to save transmission bandwidth.

As a consequence, a faster display page download is achieved at the costs of display objects not only being reduced in size but also in visible quality. This is especially apparent with respect to graphical display content, e.g., Web images, where the end user can hardly recognize compressed images after transmission. In such cases, the user has to select via the client a less restrictive compression setting to preserve a certain level of visible quality and request the reloading of the complete Web page. Here, this time consuming reloading of a display page is necessary even if the user is only interested in displaying a single display object in improved display quality within, e.g., a highly compressed display page.

SUMMARY OF INVENTION

In view of the above, the object of the present invention is to increase flexibility for the display of display pages on a client apparatus.

A further object of the present invention is to increase data transfer efficiency from a server apparatus to a client apparatus in view of requested display page characteristic requirements.

According to the present invention, these objects are achieved through a method of modifying a display page comprising a plurality of display objects arranged in a display page context on a client apparatus, comprising the steps of activating a display object of the display page for re-display; downloading display data with respect to the activated display object from a server apparatus through a download request comprising at least an identification of the activated display object; and re-displaying the activated display object by means of the downloaded display data in the same display page context.

Further, according to the present invention, these objects are achieved through a method of operating a server apparatus adapted to support a modification of a display page comprising a plurality of display objects arranged in a display page context on a client apparatus, comprising the steps of receiving a download request with respect to a display object, the download request comprising at least an identification of the display object; retrieving display data with respect to the display object; and forwarding the display data to the client apparatus for re-display of the display object.

Therefore, a first important advantage of the present invention is the aspect of selectivity when requesting a reload of particular parts of a display page through activating the related display object. Here, activation of the display object may be achieved, e.g., through a mouse click, interaction with a touch screen, using a touch pen, a keyboard of a client apparatus displaying the display page, etc.

A further important advantage of the present invention is the way a display object is handled after downloading of the related display data from the server apparatus. In particular, it is proposed to use the downloaded display data such that the display object is re-displayed in the same display page context. In other words, after re-display the display object has the same interrelation to further display objects of a display page as before activation of the display object for re-display.

It should be noted that the aspects of selectivity and maintenance of the display context for a display object after re-display outlined above according to the present invention may be applied to any kind of display page consisting of a plurality of display objects having a mutual interrelationship referred to as display page context in the sense of the present invention. One typical example would be a Web page comprising links, frames, texts, and images as display objects. Also, another example could be user interfaces set up with display windows for display of graphic objects, e. g., route guiding systems comprising textual and graphical information.

Further, the aspects of selectivity and maintenance of the display page context may be applied to any kind of client apparatus according to the present invention, e.g., a mobile telephone, a personal digital assistant PDA, a laptop running a client application and being linked to a mobile telephone providing data exchange functionality or a laptop comprising a wireless local area network LAN card, an infrared interface or a bluetooth interface. Additionally, the client apparatus may as well be a stationary client apparatus like a personal computer comprising a modem in cases where not only mobility is an issue, but also the download time is of critical importance.

According to a preferred embodiment of the present invention, the display characteristics of the display object are changed for re-display.

According to this preferred embodiment, it is not only proposed to re-display a selected part of a whole display page in the same context, but also to modify display characteristics according to user-specified requirements. One typical example would be that a display object, e.g., a display image is to be displayed with increased resolution. Thus, the selected modification of display characteristics allows to save transmission bandwidth and display page download time because only a display object of interest is separately downloaded according to the modified display characteristics to replace the originally displayed selected display object. Therefore, to change the display characteristics of an activated display object, the original related display page must not be completely downloaded from the server apparatus.

Therefore, the present invention allows for a flexible mechanism as the new functionality is integrated into the existing display mechanism, i.e. functionality defined for display objects not activated for re-display.

According to another preferred embodiment, the download request submitted from the client apparatus to the server apparatus comprises not only the identification of the display object to be re-displayed, but also at least one parameter indicating the display characteristics for re-display. Further, preferably the download request is characterized as re-display download request.

This preferred set-up of the download request allows to easily handle the download request at the server apparatus in an efficient manner. Firstly, the characterization of the download as re-display download request allows to minimize the extra effort required in the server apparatus to handle the user-selective reload mechanism according to the present invention. Secondly, the provision of at least one parameter indicating the display characteristics for re-display maximizes the flexibility. Typically, the parameter may characterize the resolution in case the display object is a display image, indicate the change of a display mode, e.g., from non-coloured to a coloured display mode, change the type of language used within a display object, indicate the kind of display object processing before repeated download, e.g., filtering with respect to contrast and contours of the display image, etc.

According to another preferred embodiment of the present invention, the display object is activated in a selective way through a sensor area defined for the display object.

Typically, the sensor area is a particular small transparent sub-area of a display object being responsive, e. g., to a click or tapping on it. Therefore, the new selective context invariant download functionality may be simply realized by defining small sensor areas within display objects that can be easily selected to trigger a single display object download request towards a server apparatus.

Furthermore, it is an advantage that the remaining display object area is still available for other functions to be selected, e.g., for a "safe-object" function.

Further preferred embodiments of the present invention are related to the implementation of the selective context invariant download mechanism at the server side.

According to a first preferred embodiment, the display data being related to the display object to be re-displayed is retrieved locally at the server apparatus from a server memory, e.g., a cache comprised therein.

This approach allows to minimize the re-display download time for the selected display object in case the related display object is stored in the memory of the server apparatus. The access to the related display data is facilitated through the identification of the display object in the related download request.

According to another preferred embodiment of the present invention, the display data of an display object to be re-displayed may be retrieved through download from a backend network to the server apparatus and subsequent forwarding of the display data to the client apparatus.

This preferred embodiment is advantageous in case, e.g., memory requirements in the server apparatus are to be minimized. Further, this mechanism serves as backup solution in case display data is not available in a local memory of the server apparatus.

Besides the local or backend based download of display data for a display object to be re-displayed, a further preferred embodiment of the present invention relates to the way this is achieved. A first option is to directly refer to the identification of the display object comprised in the download request and use this identification to either locally or remotely retrieve related display data. Yet another option is to identify the display page being related to the display object, and then retrieve the full display page being related to the display object for extraction of display object related display data therefrom. The latter approach is particularly advantageous in case it is expected that further display objects of the same display page - not yet maintained in the local cache of the server apparatus - will have to be re-displayed at the client apparatus.

According to another preferred embodiment of the present invention, it is suggested to achieve processing of retrieved display data before forwarding of this display data to the client apparatus.

A typical example for such a processing of display data is image processing, e.g., changing contours, colours or number of different colours of a display image or applying compression techniques before forwarding of display data. Assigning the display object processing to the server apparatus allows to minimize the amount of data needed for the display object transmission to the client apparatus side, which is of particular advantage in case the client apparatus is a mobile terminal, as outlined above.

Further, it should be noted that according to the present invention, no particular restriction is imposed onto the interconnection between the client apparatus and the server apparatus. E.g., in the wireless case, the interconnection may be realized via GSM, GPRS, PDC, 3GPP/TDMA IN network, wireless LAN, infrared, Bluetooth, etc. In case the interconnection is realized via a fixed network, this may be any type of public switched network, LAN, Internet, Intranet, virtual private network VPN, etc. Also, the server apparatus may be either integrated into the network realizing the interconnection between the client apparatus and itself, or provided as a stand-alone server apparatus externally to the interconnection network between the client apparatus and itself. Still further, the server apparatus may also be integrated into a backend network, e.g., the Internet. In particular, the server apparatus may be integrated into a mobile communications network of a mobile network operator.

According to another preferred embodiment of the present invention there is provided a computer program product directly loadable into the internal memory of a client/server apparatus comprising software code portions for performing the inventive method steps outlined above when the product is run on a processor of the client/server apparatus.

Therefore, the present invention is also provided to achieve an implementation of the inventive method steps on computer or processor systems. In conclusion, such implementation leads to the provision of computer program products for use with a computer system or more specifically a processor comprised in, e.g., a client apparatus or a server apparatus.

These programs defining the functions of the present invention can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs, DVD discs and harddrives; or information convey to a computer/processor through communication media such as network and/or internet and/or telephone networks via modems or other interface devices. It should be understood that such media, when carrying processor readable instructions implementing the inventive concept represent alternate embodiments of the present invention.

Further, the present invention may as well be realized by software, e.g., a Java applet, a browser plug in, Java Script, and/or Java servlets.

Still further, a computer program product in the sense of the present invention is to be understood as a software as well as a storage media storing such software.

DESCRIPTION OF DRAWING

In the following the best mode and preferred embodiments of the invention as well as further features, advantages and related technical objects will be described with respect to the drawing in which

Fig. 1     shows a schematic diagram of a telecommunication system environment supporting mobile computing as one basis for the application of the present invention;

Fig. 2     shows a flowchart illustrating an overview on a method of modifying a display page on a client apparatus according to the present invention;

Fig. 3     shows a schematic diagram of a client apparatus and a server apparatus adapted to execute the method outlined with respect to Fig. 2;

Fig. 4     shows a schematic diagram illustrating data structures for storing display pages;

Fig. 5     shows a flowchart illustrating a method of modifying a display page comprising a plurality of display objects arranged in a display page context on a client apparatus according to the present invention;

Fig. 6    shows a flowchart illustrating a method of operating a server apparatus adapted to support a modification of a display page comprising a plurality of display objects arranged in a display page context according to the present invention;

Fig. 7    shows a display page comprising a display image being displayed in a compressed mode; and

Fig. 8    shows the display page shown in Fig. 7 with the display image after re-display.

DESCRIPTION OF BEST MODE AND PREFERRED EMBODIMENTS

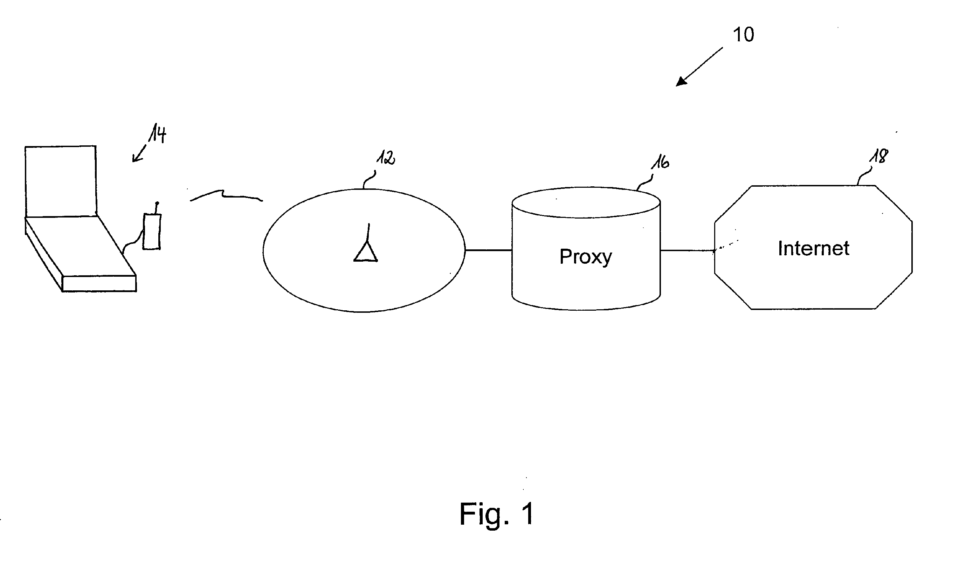

Fig. 1 shows a schematic diagram of a telecommunication system environment supporting mobile computing as one example for the application of the concepts underlying the present invention. However, it should be noted that those skilled in the art readily appreciate that the inventive concepts as outlined above and explained in more detail in the following may as well be applied to different telecommunication system environments, e.g., using different client units and interconnection networks between the client unit and the server unit.

As shown in Fig. 1, the illustrative telecommunication system environment 10 is set up using a wireless communication network 12 between the client apparatus 14 and the server apparatus 16. Further, in the example shown in Fig. 1 the client apparatus is a laptop computer using a mobile telephone as modem for exchange of data via the wireless communication network 12 to and from the server apparatus 16. The server apparatus 16 in this particular example is a proxy server apparatus. The proxy server apparatus runs an intermediate program which acts as both a server apparatus and a client apparatus between the wireless communication network and a backend network, e.g., the Internet, for the purpose of setting up requests on behalf of the mobile client 14. The requests of the mobile client 14 are either serviced internally in the proxy server apparatus 16 or by passing them on with possible translations of the requests onto other servers comprised in the backend network 18. Therefore, the proxy server apparatus 16 must interpret and, if necessary, re-write a mobile client request before forwarding it on to the backend network 18. Such proxy server apparatuses 16 are often used as client side portals through network firewalls and as support applications for handling mobile client requests via protocols not implemented in the mobile client software (RFC 1945).

In view of the telecommunication system environment shown in Fig. 1 and its one non-restrictive example underlying the concepts of the present invention, it may be assumed that a user of the mobile client 14 initiates access to the backend network 18 using his mobile client 14 for requesting, e.g., an Internet Web page. The proxy server apparatus 16 accepts the Web page request and retrieves the corresponding Web page display data either locally or from the backend network 18. Thereafter, the proxy server apparatus 16 optionally applies compression and filtering techniques to reduce the amount of the Web page display data for effective use of the available bandwidth in the wireless communication network 12. Hereby the visible quality in particular of display images of the Web page will be reduced. Further, the proxy server apparatus 16 integrates additional functional program code, e.g., via Java Script, into the processed Web page display data to enable, e.g., user interaction for the user of the mobile client 14. The server apparatus executes download of the display data after compression and enhancement in functionality to the mobile client 16.

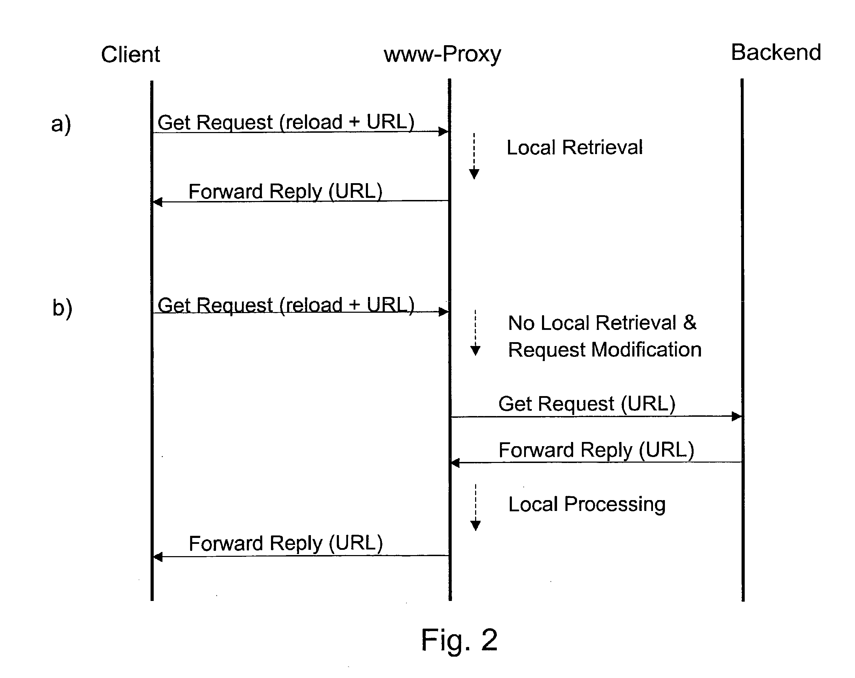

Fig. 2 shows a flowchart illustrating an overview on the method of modifying a display page on a client apparatus, e.g., the mobile client shown in Fig. 1, according to the present invention. In particular, Fig. 2(a) shows an application scenario where the download request from the mobile client 14 is processed locally in the proxy server apparatus 16 and Fig. 2(b) shows an application scenario where the download request from the mobile client 14 is re-submitted to the backend network 18 for retrieval of display data being related to the display object to be re-displayed.

As shown in Fig. 2(a), according to the first application scenario, at the client side single display object re-display requests will be issued, e.g., as get request comprising the indication of a reload request and the identification of the display object to be re-displayed in the form, e.g., of a unified resource locator URL used for the WWW. The server apparatus analyses the download request and verifies that the requested display object for re-display is contained in its local memory so that no further subsequent request towards the backend 18 is necessary. Therefore, the server apparatus 16 forwards the requested display data being related tothe display object, e.g., a display image, to the mobile client 14, e.g., in uncompressed form or after a processing of the display data according to parameters further specified in the requests for re-display of a display object.

As shown in Fig. 2(b), a second application scenario relates to a case where the display data being related to the display object to be re-displayed is not available in the local memory of the server apparatus 16. Here, again initially a single download request for a display object to be re-displayed is issued from the client apparatus side. Again, the server apparatus 16 analyses the download request and finds that the related display data is not available in its local memory. Therefore, the server apparatus 16 will set up a further request towards a server apparatus in the backend network, e.g., the Internet to obtain the required display data at its original identification URL. The server apparatus in the backend network accepts the request from the server apparatus 16 and responds to it with a reply to the server apparatus 16 containing the requested display data according to the submitted identification of the display object URL. The server apparatus 16 in turn forwards the received display data - eventually after a suitable processing thereof - to the client apparatus 14.

As outlined above, besides the aspect of local retrieval and remote retrieval, another aspect of the present invention is the amount of retrieval display data, in particular in the remote case. Here, a first option is to retrieve solely display data being related to the display object to be re-displayed. Another option is to retrieve a full display page, e. g., a Web page, being related to the display object and to then store this full Web page in the local memory of the server apparatus 16. After an extraction from display object related display data from the display data being related to the full display page, this extracted display data may then be forwarded to the mobile client 14.

This approach has the advantage that in case further requests for forwarding display data of different display objects on the same display page are submitted to the server apparatus 16, then the processing thereof may be accelerated as the related display data is now available in the local memory of the server apparatus 16.

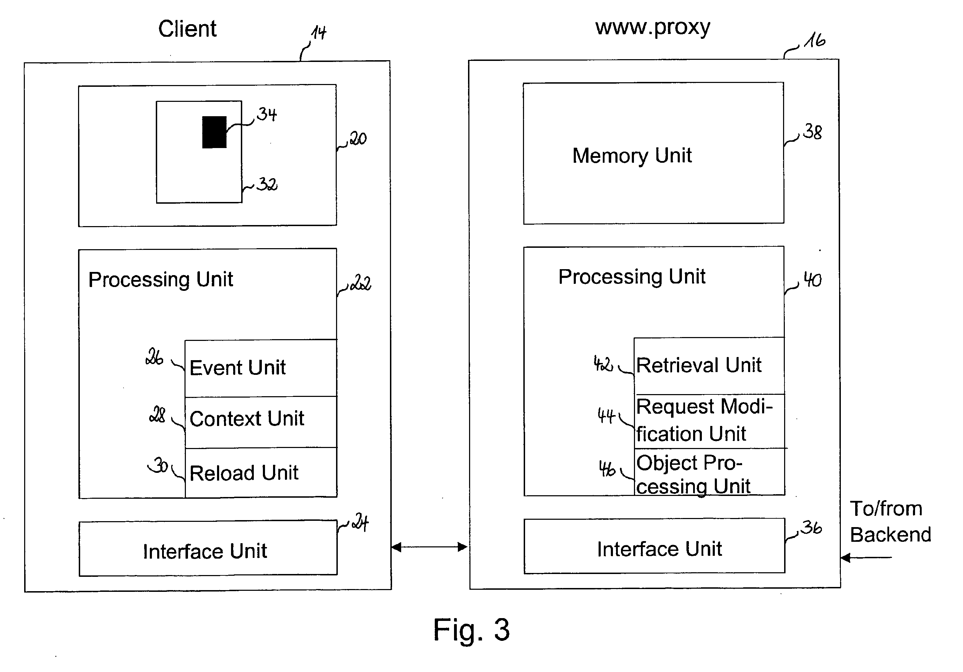

Fig. 3 shows a schematic diagram of a client apparatus and a server apparatus adapted to execute the method outlined above with respect to Fig. 2.

In particular, in the following the operation of the client apparatus and the server apparatus will be explained with respect to HTML, XML, and Java technology as one example.

As shown in Fig. 3, the client apparatus 14 comprises a display unit 20, a processing unit 22, and an interface unit 24. Further, the processing unit 22 comprises an event unit 26, a context unit 28, and a reload unit 30 to be explained in more detail in the following.

Operatively, the display unit 20 is adapted to display a plurality of display objects 32 for set-up of a display page. For each specific display object there is defined a display page context as interrelation between this specific display object and further display objects of the display page. Further, for each display object there is defined a sensor area 34 for activation of the display object before re-display, i.e. for putting the display object in a state suitable for re-display.

Heretofore, the event unit 26 of the processing unit 22 checks continuously if a user event - e.g., a mouse click, an interaction on a touch screen, etc. - has occurred regarding the display page displayed on the mobile client 14.

In the affirmative case, the coordinates x, y of the user event as well as the target display object of the event are determined. Subsequently, the event unit 26 checks if the specific type of object being related to the user event is of the type suitable for redisplay. If this is the case, then a transparent sensor area of the corresponding display object is computed defined by variables sub.range_X and sub.range_Y as follows:

$$\text{sub.range\_X} = [\text{obj.x} + 0.8 * \text{obj.width}, \text{obj.x} + \text{obj.width}]$$

$$\text{sub.range\_Y} = [\text{obj.y}, \text{obj.y} + 0.2 * \text{obj.height}]$$

Hereby, it is assumed that the origin of the display object is the upperleft corner of the display object which is typically the case for Web page display objects. The sensor area is lying in the upper right part of the display object and covering 20% of the width and height of the display object, both along the vertical and horizontal direction.

The event unit 26 checks if the x, y coordinates of the user event are completely lying in the sensor area, and in the affirmative case triggers the reload unit 30 to start operation.

Operatively, the reload unit 30 is adapted to set up a download request at least comprising an identification of the estimated display, e.g., the unified resource locator URL used to find the origin of these pages.

Preferably, the reload unit 30 will set up the download request also with parameters indicating the display characteristics for the redisplay and characterize the download request as that redisplay download request. One typical example for such a reload request would be:

$$\text{newURL} = \text{"http://reload.webonair/WOAgetorig.html?src="} + \text{obj.src}.$$

Here, the reload part indicates the type of request, i.e. that a request for redisplay of a specific display object is submitted to the server apparatus 16.

Further, the part usually used to receive a display page for display on the mobile client 14 - i.e., WOA getorig (webonair get original).html - is optionally inserted to the reload request. This is of advantage in case the display data being related to the display object to be re-displayed are not available in the local cash of the server apparatus 16.

The server apparatus 16 may use this general part of the reload request to further submit a request for, e.g., the complete display page to the backend network 18.

After the question mark ? in the reload request follows the identification of the display object to be re-displayed at the mobile client - i.e., the part OBJ.src -,e.g., in the form of a unified resource locator URL.

In other words, the first part of the reload request signals the server apparatus 16 that a dedicated request to a specific display object is submitted for retrieval of display data stored under the identification defined in the second part of the reload request.

In more detail, the reload unit 30 assigns the variable newURL a special URL consisting of a first half signalling the server apparatus 16 that it has to separately request the display object, e.g., an image, in original quality according to "reload.webonair". It uses the identification URL that is stored in the SRC property in the display object OBJ being identified by the event unit 26 and to define the second half of the variable newURL before submission to the server apparatus 16.

Assuming that the reload request is handled appropriately in the server apparatus 16 as will be explained in more detail in the following, a context unit 28 operatively achieves the display of downloaded display data at the mobile client 14 using the same display context.

As example and without restriction to the present invention, one example to achieve this is to assign the SRC property of the display object OBJ activated for redisplaying the single related identification URL as follows:

$$obj.src = newURL.$$

In view of this, the context unit 28 loads the activated display object from the server apparatus 16 and displays the related downloaded display data at the same place within the currently displayed display page, e.g., a Web page image which is displayed as the activated display object. One example to achieve this is the Document Object Model which is a platform- and language-neutral interface that will allow programs and scripts to dynamically access and update the content, structure and style of documents. The document can be further processed and the results of that processing can be incorporated back into the presented display page.

While above the functionality of the client apparatus 14 has been explained with respect to HTML and Java implementation aspects, it should be noted that those skilled in the art readily appreciate that the inventive concept may not only be achieved using object-oriented approaches but as well on the basis of procedural coding, a combination thereof, or through dedicated hardware.

As shown in Fig. 3, the necessary data exchange between the client apparatus 14 and the server apparatus 16 is achieved via the interface unit 24 of the client apparatus 14 and an interface unit 36 of the server apparatus 16. Further, the server apparatus 16 comprises a local memory 38 and a processing unit 40 dividing at least into a retrieval unit 42, a request modification unit 44, and an object processing unit 46.

Operatively, the memory unit 38 is adapted to store either complete display pages, e.g., Web pages, or single display objects of such display pages.

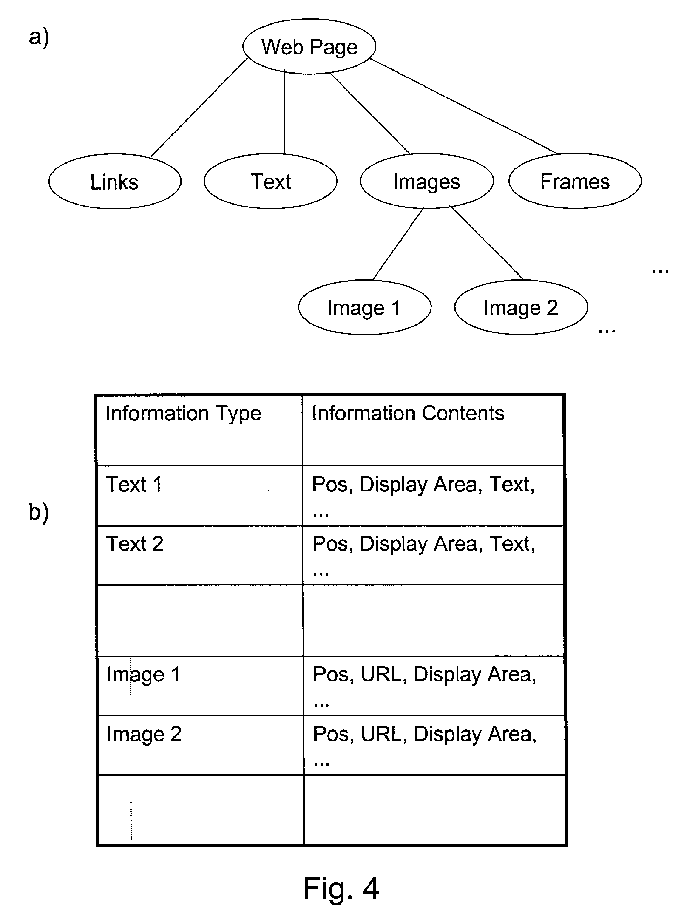

Fig. 4 shows a schematic diagram illustrating data structures for such a storage of display pages.

As shown in Fig. 4(a), a first way to achieve storage of display pages is to use a tree data structure where a display page, e.g., subdivides into links, text elements, images, frames, etc. Further, different images of a display page are summarized under a single node, so that different images may be retrieved through tree-traversal.

Fig. 4(b) shows another alternative for the handling of display pages and display objects in the local memory 38 of the server apparatus 16 using a table representation. Here, such a table would typically divide into an information type and an information contents representation. A dedicated display object may then be retrieved through, e.g., linear search in the table representation or through haching of the identification of the display object to achieve accelerated display object display data access.

Yet another alternative (not shown) would be to use a linked linear list of display objects.

Referring again to Fig. 3, operatively the retrieval unit 42 is adapted to retrieve the display data with respect to the display object to be redisplayed at the client apparatus 14.

A first option is to retrieve display data locally from the memory unit 38. A second option is to retrieve the display data from the backend network 18 in case the required display data is not available locally in the server apparatus 16. This second option requires triggering of the request modification unit 44 through the retrieval unit 42.

As shown in Fig. 2, operatively the request modification unit 44 will remove the part of the download request submitted by the client apparatus 14 indicating that the download request is related to the re-display of a display object before submitting the modified download request to the backend network 18.

The backend network 18 may then respond either with the specific display data being related to the identified display object or with the complete display page data being related to the display object to be re-displayed.

In the latter case, the display data of the full display page may be stored in the memory unit 38 for subsequent downloading of further display objects of this display page to the client apparatus 14 without further access to the back end network 18 for accelerated processing of download requests.

In the latter case, an extraction step for the specific display object to be re-displayed is executed in view of the display data of the full display page. It should be noted that according to the present invention also a partial Web display page download from the backend network is considered.

Further, the object processing unit 46 of the server apparatus 16 operatively modifies display data before download to the client apparatus 14 for re-display of the display object.

One typical example is image processing, e.g., of an image comprised in a web page. With respect to image processing, typical processing steps are modification of compression rate, conversion of colour into grey shades, reduction of different colours used for a display image, filtering, or change of display format according to JPEG, GIF, PNG, etc.

Other processing steps, e.g., being related to text-based display objects, are text translation, supplementing text passages by information relevant only in a local area, etc.

Yet another example with respect to processing on display objects could be a modification of hyperlinks in a Web page for subsequent pointing to local server resources and related localized information and service provision.

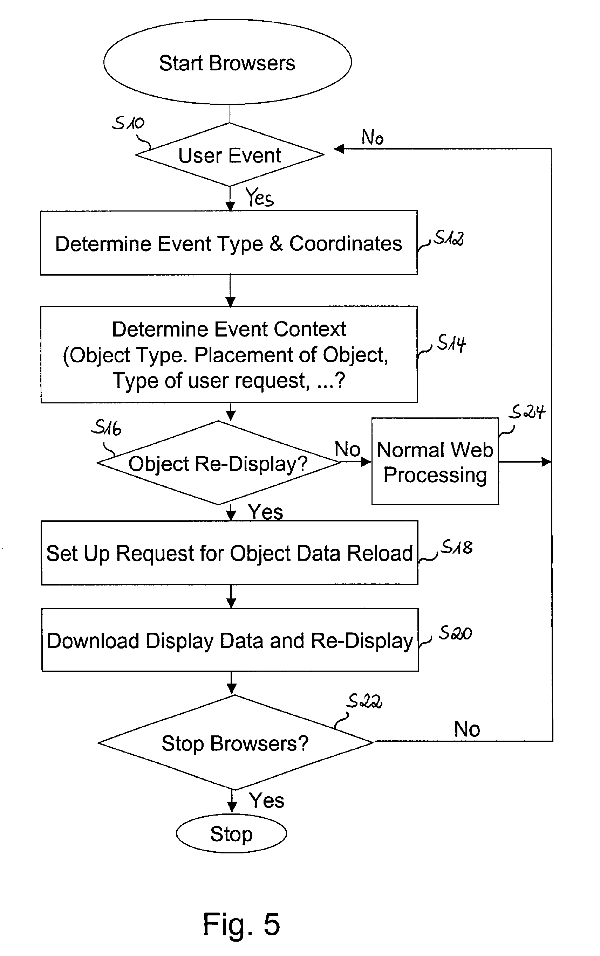

Fig. 5 shows a flowchart summarizing the method of modifying a display page comprising a plurality of display objects arranged in a display page context on a client apparatus. Typically - without restricting the scope of the present invention - such a method may be integrated into a browser application running on the client apparatus.

As shown in Fig. 5, after start of the browser there is a continuous scan of user events in step S10 followed by the determination of the type of event and related event coordinates in step S12.

Then, in step S14 there is determined the context of the related display object, e.g., the placement of the display object being requested for re-display, the object type, and eventually a type of user requests.

In case the interrogation of step S16 shows that a redisplay of a display object is not requested, there is carried out normal web processing in step S24. To the contrary, in case the user requests a display object re-display - which is interrogated in step S16 - there follows a set-up of a download request for related display data in step S18 followed by the download of the re-display data step S20.

In step S22 it is then interrogated whether the browser application is to be stopped or not. In the non-affirmative case, the procedure branches back to step S10 to scan for further user events.

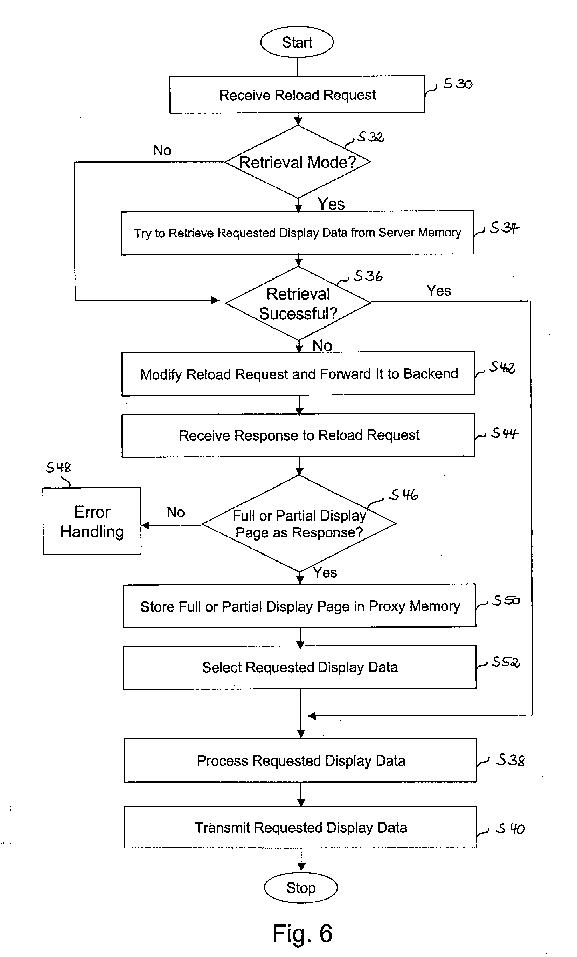

Fig. 6 shows a flowchart summarizing the method of operating a server apparatus adapted to support a modification of a display page according to the present invention.

As shown in Fig. 6, after receipt of a reload request in step S30, there follows an interrogation in step S32 to determine whether the server apparatus is operated in a retrieval mode to access the local memory thereof or to operate for retrieval of display data from a back end network.

In the affirmative case, it is tried in step S34 to retrieve the requested display data from the local memory in the proxy apparatus. In step S36 it is then checked whether the retrieval has been successful or not. In the affirmative case, the procedure goes on to step S38 to process the requested object - e.g., according to the processing steps explained above such as image processing - and then follows the download of the requested display data to the client apparatus in step S40.

To the contrary, if the local retrieval of display data has not been successful, the request for downloading of display data is modified for submission to the backend network in step S42 and then display data is received from the backend network either with respect to a single display object, a full display or a partial display page, as outlined above.

In step S46 it is evaluated whether the download of display data from the backend network has been successful or not. If this is not the case, the procedure branches to an error handling step S48. Otherwise, the received display data is stored in the local memory of the server apparatus S50 and then necessary display data is extracted or selected from the display data downloaded from the back end network and stored in the local memory in step S52. Subsequent hereto, the steps S38 and S40 are carried out to achieve the display objects redisplay.

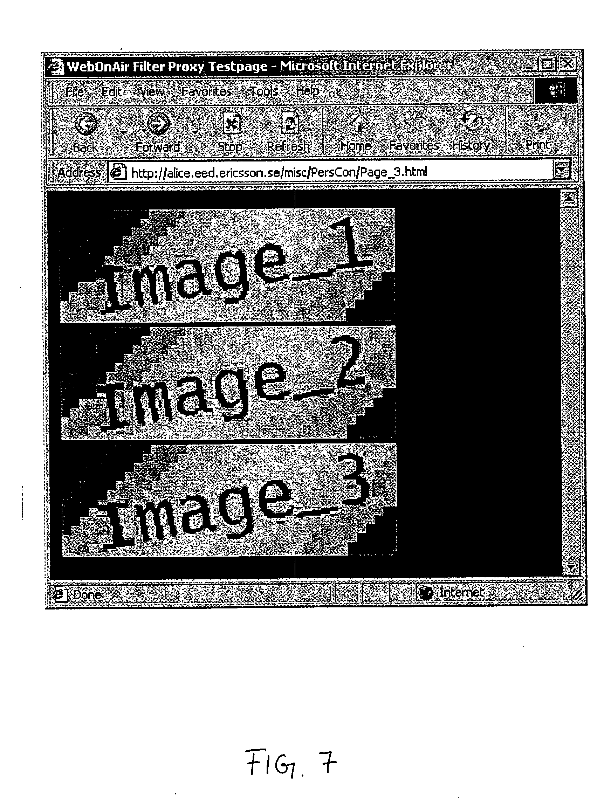

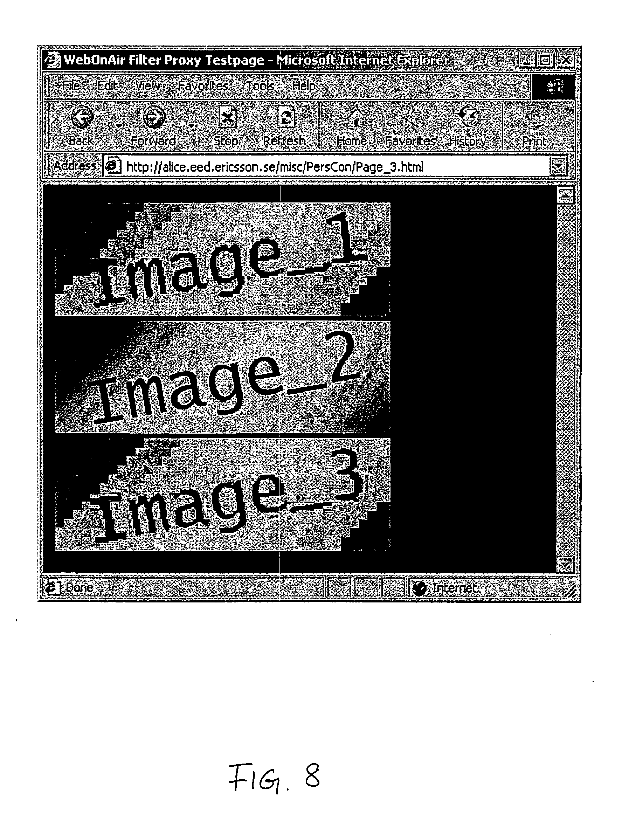

To give an example of the effects of the present invention, the Fig. 7 shows a display page comprising a display image being displayed in a compressed mode, and Fig. 8 shows the same display page and the same display image after redisplay.

As can be seen from the examples shown in Fig. 7 and 8, due to compression and filtering techniques applied, e.g., by the WWW server apparatus, the display image shown in Fig. 7 contains images reduced in quality. As shown in Fig. 8, after the display image has been downloaded from the server apparatus for redisplay, it replaced the originally displayed display image, while the rest of the display page remains unchanged, so that the user of the client apparatus now has available the full display quality in a selective manner and in the same display context.

**Claims**

1. Method of modifying a display page comprising a plurality of display objects arranged in a display page context on a client apparatus, comprising the steps:

   - activating a display object of the display page for re-display;

   - downloading display data with respect to the activated display object from a server apparatus through a download request comprising at least an identification of the activated display object;

   - re-displaying the activated display object by means of the downloaded display data in the same display page context.

2. Method according to claim 1, **characterized in that** display characteristics of the display object are changed for re-display.

3. Method according to claim 2, **characterized in that** the download request comprises at least one parameter indicating the display characteristics for re-display.

4. Method according to the claims 1 to 3, **characterized in that** the download request is submitted as a re-display download request to the server apparatus.

5. Method according to one of the claims 1 to 4, **characterized in that** the display page is a Web page and that the display object is an image object in the web page.

6. Method according to one of the claims 1 to 5, **characterized in that** the display object is activated in a selective way through a sensor area defined for the display object.

7. Method of operating a server apparatus adapted to support a modification of a display page comprising a plurality of display objects arranged in a display page context on a client apparatus, comprising the steps:

   - receiving a download request with respect to a display object, the download request comprising at least an identification of the display object;

   - retrieving display data with respect to the display object;

   - forwarding the display data to the client apparatus for re-display of the display object.

8. Method according to claim 7, **characterized in that** display data is retrieved locally in the server apparatus.

9. Method according to claim 7, **characterized in that** display data is retrieved through download from a backend network to the server apparatus.

10. Method according to claim 8 or 9, **characterized in that** display data is retrieved thorough reference to the identification of the display object.

11. Method according to claim 8 or 9, **characterized in that** the step of retrieving display data comprises the sub-steps:

   - identification of the display page of the display object;

   - retrieving display page related display data; and

   - extracting display object related display data from the display page related display data.

12. Method according to one of the claims 1 to 11, **characterized in that** it further comprises the step of processing retrieved display data before forwarding this retrieved display data to the client apparatus to change display characteristics of the display object.

**13.** Terminal unit adapted to display a display page comprising a plurality of display objects arranged in a display page context, the terminal unit comprising a processing unit being adapted to execute a method according to one of the claims 1 to 6.

**14.** Terminal unit according to claim 13, **characterized in that** it is selected from a group comprising mobile telephone, personal digital assistant, mobile computer having wireless communication capability, and mobile computer being interconnected with a mobile telephone for wireless data exchange.

**15.** Server apparatus adapted to support a modification of a display page comprising a plurality of display objects arranged in a display page context on a client apparatus, the server apparatus comprising a processing unit being adapted to execute a method according to one of the claims 7 to 12.

**16.** Computer program product directly loadable into the internal memory of a client/server processing unit, comprising software code portions for performing the steps of one of the claims 1 to 12, when the product is run on a processor of the client/server processing unit.

Fig. 1

Client          www-Proxy          Backend

a)    Get Request (reload + URL) →

Local Retrieval

← Forward Reply (URL)

b)    Get Request (reload + URL) →

No Local Retrieval &
Request Modification

Get Request (URL) →

← Forward Reply (URL)

Local Processing

← Forward Reply (URL)

## Fig. 2

Client <sub>14</sub>

www.proxy <sub>16</sub>

| Client | www.proxy |
|---|---|
| 34 | |
| 32 | 20 | Memory Unit | 38 |
| Processing Unit | 22 | Processing Unit | 40 |
| 26 Event Unit | 42 Retrieval Unit |
| 28 Context Unit | 44 Request Modification Unit |
| 30 Reload Unit | 46 Object Processing Unit |
| Interface Unit | 24 | Interface Unit | 36 |

To/from Backend

EP 1 267 276 A1

13

Fig. 3

a)

b)

| Information Type | Information Contents |
| --- | --- |
| | |
| Text 1 | Pos, Display Area, Text, ... |
| Text 2 | Pos, Display Area, Text, ... |
| | |
| Image 1 | Pos, URL, Display Area, ... |
| Image 2 | Pos, URL, Display Area, ... |
| | |

Fig. 4

Fig. 5

Fig. 6

FIG. 7

FIG. 8

## EUROPEAN SEARCH REPORT

Application Number

EP 01 11 3533

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | SHIMADA T ET AL: "Interactive scaling control mechanism for World-Wide Web systems" COMPUTER NETWORKS AND ISDN SYSTEMS, NORTH HOLLAND PUBLISHING. AMSTERDAM, NL, vol. 29, no. 8-13, 1 September 1997 (1997-09-01), pages 1467-1477, XP004095341 ISSN: 0169-7552 * page 1468, left-hand column, line 9 - page 1469, right-hand column, line 2; figures 1,8,9 * * page 1473, right-hand column, line 10 - page 1474, left-hand column, line 23 * | 1-16 | G06F17/30 |
| X | BICKMORE T W ET AL: "Digestor: device-independent access to the World Wide Web" COMPUTER NETWORKS AND ISDN SYSTEMS, NORTH HOLLAND PUBLISHING. AMSTERDAM, NL, vol. 29, no. 8-13, 1 September 1997 (1997-09-01), pages 1075-1082, XP004095305 ISSN: 0169-7552 * page 1079, left-hand column, line 9 - page 1080, left-hand column, line 12; figure 4 * | 1-16 | TECHNICAL FIELDS SEARCHED (Int.Cl.7) G06F |

-/--

The present search report has been drawn up for all claims

| Place of search | Date of completion of the search | Examiner |
|---|---|---|
| BERLIN | 6 March 2002 | Deane, E |

| | European Patent Office | EUROPEAN SEARCH REPORT | Application Number<br>EP 01 11 3533 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | FOX A. AND BREWER E.A.: "Reducing WWW Latency and Bandwidth Requirements by Real-Time Distillation"<br>PROC. 5TH. INT. WORLD WIDE WEB CONFERENCE, [Online] 6 - 10 May 1996, XP002192214<br>Paris, France<br>Retrieved from the Internet:<br><URL:http://www5conf.inria.fr/fich_html/papers/P48/Overview.html><br>[retrieved on 2002-03-05]<br>* paragraph [02.2] - paragraph [02.4]; figure 1 * | 1,7 | |
| A | MA WEI-YING ET AL: "Framework for adaptive content delivery in heterogeneous network environments"<br>PROC. MULTIMEDIA COMPUTING AND NETWORKING 2000, PUBL.: PROC. SPIE - INT. SOC. OPT. ENG. (USA),<br>vol. 3969, 24 - 26 January 2000, pages 86-100, XP002168331<br>San Jose, CA, USA<br>* abstract *<br>* paragraphs [0002],[0003]; figure 2 * | 1,7 | TECHNICAL FIELDS SEARCHED (Int.Cl.7) |

The present search report has been drawn up for all claims

| Place of search | Date of completion of the search | Examiner |
|---|---|---|
| BERLIN | 6 March 2002 | Deane, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)